# FASCICULE DE BREVET EUROPEEN

(11) **EP 2 921 368 B1**
(45) Date de publication et mention de la délivrance du brevet: **19.08.2020**
(21) Numéro de dépôt: 15158408.3
(22) Date de dépôt: 10.03.2015
(51) Int. Cl.: B61D 27/00

(54) **Dispositif de climatisation pour un véhicule ferroviaire comportant au moins deux voitures**
Klimaanlagenvorrichtung für ein Schienenfahrzeug, das mindestens aus zwei Wagen besteht
Air-conditioning device for a railway vehicle having at least two carriages

(30) Priorité: 20.03.2014 FR 1452332
(43) Date de publication de la demande: 23.09.2015
(73) Titulaire: ALSTOM Transport Technologies, 93400 Saint-Ouen (FR)
(72) Inventeur: Do, Huu-Thi, 17300 Rochefort (FR); Varin, Etienne, 17140 Lagord (FR)
(74) Mandataire: Lavoix

(56) Documents cités:
- DE-A1-102012 207 795
- JP-A- S5 128 910
- US-A- 2 116 538

## Description

La présente invention concerne un dispositif de climatisation pour un véhicule ferroviaire comportant au moins deux voitures. Par exemple, ce dispositif de climatisation est destiné à équiper un tramway, un métro ou un train régional.

On connaît déjà, dans l'état de la technique, un dispositif de climatisation d'au moins deux voitures adjacentes d'un véhicule ferroviaire, comprenant des moyens d'émission d'un flux d'air climatisé et un réseau de circulation de l'air climatisé, propre à faire circuler l'air climatisé depuis les moyens d'émission jusqu'à des salles ménagées dans les voitures.

DE 10 2012 207 795 décrit un exemple de dispositif de climatisation.

Habituellement, le réseau de circulation comporte au moins un conduit de distribution d'air climatisé s'étendant sur l'ensemble des voitures climatisées par ce dispositif. Ce conduit de distribution comporte plusieurs parties alignées dans un ordre prédéterminé, chaque partie étant agencée dans une voiture distincte. En d'autres termes, les voitures doivent également être alignées dans un ordre prédéterminé. Ainsi, il est difficile de modifier la configuration du véhicule ferroviaire, car l'ajout, le retrait ou le remplacement de voitures nécessite un réagencement complet du dispositif de climatisation.

L'invention a notamment pour but de remédier à cet inconvénient, en fournissant un dispositif de climatisation modulaire, permettant aisément de modifier la configuration du véhicule ferroviaire.

A cet effet, l'invention a notamment pour objet un dispositif de climatisation selon la revendication 1.

On notera que seuls les conduits de distribution effectuent une distribution d'air conditionné. Chaque conduit de transfert présente uniquement une fonction de transfert, et il est donc dépourvu de sortie d'air conditionné à destination d'une salle.

Conformément à l'invention, chaque voiture comporte un conduit de distribution complet qui lui est propre. Ainsi, les conduits de distribution de deux voitures adjacentes sont indépendants.

En d'autres termes, la structure du premier circuit de circulation ne dépend pas de la configuration du véhicule ferroviaire, puisque cette structure est limitée à ladite première voiture. Ainsi, l'ajout ou le retrait d'une voiture n'impacte pas sur la structure du premier circuit de circulation.

Il est de même possible d'aligner plusieurs voitures chacune équipée d'un circuit de circulation similaire audit premier circuit, chacun des circuits étant structurellement indépendant des autres.

Le dispositif de climatisation selon l'invention est donc modulaire, si bien qu'il est possible de modifier la configuration du véhicule ferroviaire sans opérer de modification structurelle majeure du dispositif de climatisation.

Un dispositif de climatisation selon l'invention peut comporter en outre l'une ou plusieurs des caractéristiques suivantes, prises seules ou selon toutes combinaisons techniquement envisageables.
- Chaque premier conduit de distribution comporte une sortie d'air climatisé, comportant au moins un orifice de sortie d'air, la sortie d'air climatisé s'étendant le long du premier conduit de distribution, et chaque premier conduit de distribution présente une section transversale variable, diminuant depuis l'extrémité amont jusqu'à l'extrémité aval.
- Le réseau de circulation comporte un deuxième circuit de circulation, destiné à équiper une deuxième voiture comportant : - une deuxième arrivée d'air climatisé, à travers laquelle passe un flux d'air entrant issu du premier conduit de transfert d'air, et - au moins un premier conduit de distribution d'air climatisé vers une salle de ladite deuxième voiture, l'intégralité du flux d'air entrant étant réparti parmi le ou les deuxièmes conduits de distribution.
- Le réseau de circulation comporte un déflecteur, agencé en aval des moyens d'émission de flux d'air, séparant le flux d'air issu des moyens d'émission en un premier flux d'air dirigé vers ledit premier circuit, et en un deuxième flux d'air dirigé vers un troisième circuit de circulation d'air.
- Ledit troisième circuit de circulation d'air est destiné à équiper une troisième voiture, et comporte : - une troisième arrivée d'air climatisé, à travers laquelle passe un flux d'air entrant issu des moyens d'émission, - au moins un troisième conduit de distribution d'air climatisé vers une salle de ladite troisième voiture, - au moins un troisième conduit de transfert d'air climatisé vers un quatrième circuit de circulation d'air climatisé adjacent, et - des troisièmes moyens de répartition d'air climatisé issu de la troisième arrivée d'air, propres à répartir le flux d'air entrant entre les troisième conduits de distribution et de transfert.

L'invention concerne également un véhicule ferroviaire, comportant au moins deux voitures adjacentes, caractérisé en ce qu'il comporte un dispositif de climatisation tel que défini précédemment.

Avantageusement, un véhicule ferroviaire selon l'invention peut comporter l'une ou l'autre des caractéristiques suivantes, prises seules ou en combinaison.
- Le véhicule comporte une première voiture, dans laquelle est agencé le premier circuit de circulation, et une deuxième voiture, adjacente à la première voiture, dans laquelle est agencé le deuxième circuit de circulation.
- Le véhicule comporte une troisième voiture, adjacente à la première voiture, dans laquelle est agencé ledit troisième circuit de circulation.

L'invention sera mieux comprise à la lecture de la description qui va suivre, donnée uniquement à titre d'exemple et faite en se référant aux figures annexées, parmi lesquelles :
- la figure 1 est une vue du dessus d'un véhicule ferroviaire, vu du dessus par transparence partielle, équipé d'un dispositif de climatisation selon un exemple de mode de réalisation de l'invention ;
- la figure 2 représente schématiquement le dispositif de climatisation équipant le véhicule ferroviaire de la figure 1.

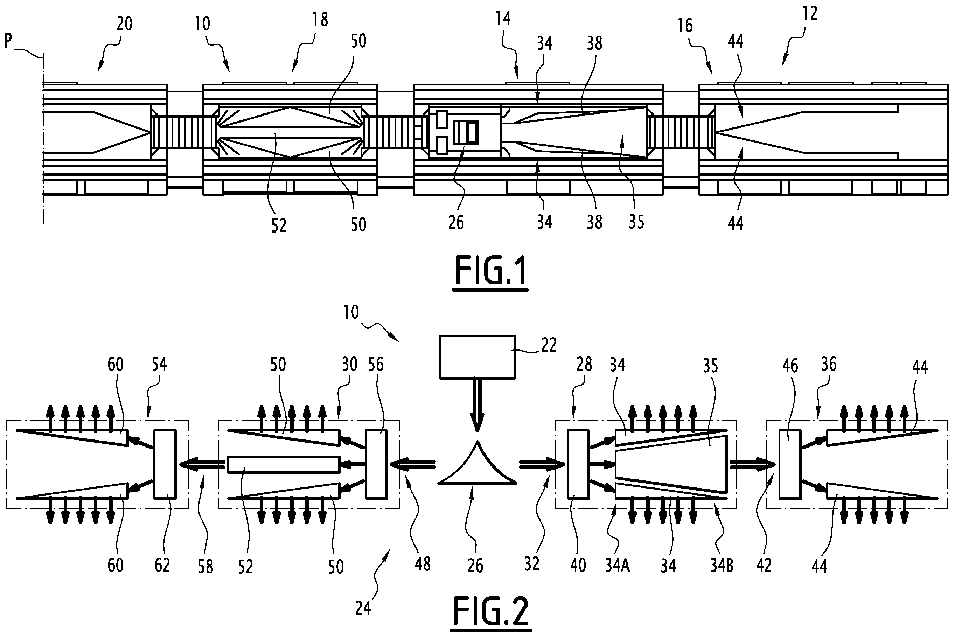

On a représenté, sur la figure 1, un véhicule ferroviaire 12, et plus particulièrement on a représenté plusieurs voitures de ce véhicule ferroviaire 12, à savoir une première voiture 14, une deuxième voiture 16, par exemple une voiture motrice, adjacente à ladite première voiture et une troisième voiture 18 adjacente à la première voiture 14, ainsi qu'une quatrième voiture 20 adjacente à la troisième voiture 18. La quatrième voiture 20 est représentée partiellement sur la figure 1, cette quatrième voiture 20 étant coupée par un plan transversal central P.

Le véhicule ferroviaire 12 est équipé d'un dispositif de climatisation 10, destiné à climatiser les première 14, deuxième 16 et troisième 18 voitures, ainsi qu'une moitié de la quatrième voiture 20, qui est la moitié représentée sur la figure 1. Le véhicule ferroviaire 12 peut par exemple comporter d'autres voitures non représentées, climatisées au moyen d'un autre dispositif de climatisation disposé de manière symétrique à celui représenté sur la figure 1, la symétrie étant considérée par rapport au plan P.

Chaque voiture 14, 16, 18, 20 comporte au moins une salle, par exemple une salle pour passagers, ou une salle des machines. Avantageusement, les salles de ces voitures communiquent entre elles.

Le dispositif de climatisation 10, représenté plus en détail sur la figure 2, comporte des moyens 22 d'émission d'un flux d'air climatisé, et un réseau 24 de circulation de l'air climatisé, transportant l'air climatisé depuis les moyens d'émission 22 jusqu'aux salles des différentes voitures du véhicule ferroviaire 12.

Conformément au mode de réalisation décrit, les moyens d'émission 22 sont agencés sur la première voiture 14. Le réseau de circulation 24 comporte un déflecteur 26 de type classique, agencé en aval des moyens d'émission de flux d'air 22, et également agencé sur la première voiture 14.

Ce déflecteur 26 est destiné à séparer le flux d'air issu des moyens d'émission 22, en un premier flux d'air dirigé vers un premier circuit 28 de circulation d'air climatisé et un deuxième flux d'air dirigé vers un autre circuit de circulation d'air 30. Plus particulièrement, ledit premier circuit 28 équipe la première voiture 14, et ledit autre circuit 30 équipe la troisième voiture 18.

Le premier circuit de circulation 28 comporte une arrivée d'air climatisé 32, à travers laquelle passe un flux d'air entrant issu des moyens d'émission 22, et plus particulièrement, dans l'exemple décrit, correspondant audit premier flux d'air provenant du déflecteur 26.

Le premier circuit de circulation 28 comporte par ailleurs au moins un premier conduit 34 de distribution d'air climatisé, destiné à distribuer l'air climatisé vers la salle de la première voiture 14. Chaque premier conduit de distribution d'air 34 s'étend depuis une extrémité amont 34A, communiquant avec l'arrivée d'air 32, jusqu'à une extrémité aval 34B fermée. Avantageusement, chaque premier conduit de distribution d'air 34 s'étend longitudinalement dans la voiture, c'est-à-dire parallèlement à une direction longitudinale de la voiture, afin d'effectuer une distribution d'air tout au long de la voiture.

Les extrémités amont 34A et aval 34B sont toutes deux agencées dans la voiture 14. Ainsi, le premier conduit 34 s'étend intégralement dans la première voiture 14, et sa structure ne dépend donc pas des voitures adjacentes à cette première voiture 14.

Chaque premier conduit de distribution 34 comporte une sortie d'air climatisé, comprenant au moins un orifice de sortie d'air, la sortie d'air climatisé s'étendant le long du premier conduit de distribution 34. Par exemple, la sortie d'air comporte une fente ou plusieurs fentes parallèles s'étendant le long du premier conduit de distribution 34, ou une pluralité d'orifices, alignés le long du premier conduit de distribution 34.

Dans la présente description, les conduits dits « de distribution » sont ceux présentant une fonction de distribution d'air climatisés. En d'autres termes, ce sont les seuls conduits pourvus de sortie d'air à destination d'une salle.

Le premier circuit de circulation 28 comporte par ailleurs un premier conduit 35 de transfert d'air climatisé vers un deuxième circuit 36 de circulation d'air climatisé adjacent. Ce deuxième circuit de circulation 36 équipe la deuxième voiture 16 adjacente à la première 14.

Dans l'exemple décrit, le premier conduit de transfert 35 est agencé de manière centrale sur la première voiture 14. Le premier circuit de circulation 28 comporte alors deux premiers conduits de distribution latéraux 34 agencés latéralement de part et d'autre du premier conduit de transfert 35. Les premiers conduits de distribution latéraux 34 s'étendent parallèlement au premier conduit de transfert 35.

Par exemple, le premier conduit de transfert central 35 est séparé des premiers conduits de distribution latéraux 34 par des cloisons 38, par exemple des cloisons métalliques.

Dans la présente description, les conduits dits « de transfert » sont ceux présentant uniquement une fonction de transfert d'air. En d'autres termes, ces conduits de transfert sont dépourvus de sortie d'air à destination d'une salle.

Le premier circuit de circulation 28 comporte enfin des premiers moyens 40 de répartition d'air climatisé issu de l'arrivée d'air 32, propres à répartir cet air climatisé entre les premiers conduits de distribution 34 et le premier conduit de transfert 35. Ainsi, l'intégralité du flux d'air entrant est répartie entre les premiers conduits de distribution 34 et de transfert 35.

Plus particulièrement, un taux β du flux d'air entrant est dirigé vers les premiers conduits de distribution 34, et un taux 1-β du flux d'air entrant est dirigé vers le premier conduit de transfert 35. Ce taux 1-β de flux d'air entrant est transmis au deuxième circuit de circulation d'air 36.

Le taux β est déterminé de façon à obtenir des quantités d'air climatisé satisfaisantes, quelle que soit la configuration du véhicule ferroviaire, notamment lorsque la première voiture 14 est adjacente à la deuxième voiture 16, ou lorsqu'une voiture intermédiaire est intercalée entre la première voiture 14 et la deuxième voiture 16.

Par exemple, pour un flux d'air Q=4200m³/h, le taux β est choisi égal à 55%.

Avantageusement, chaque premier conduit de distribution 34 présente une section transversale variable, et plus particulièrement une section transversale diminuant depuis l'extrémité amont 34A jusqu'à l'extrémité aval 34B. Cette diminution de la section transversale du conduit de distribution 34 permet de conserver un débit d'air climatisé sensiblement constant tout au long de la sortie d'air climatisé. En effet, le volume d'air climatisé diminuant le long du conduit de distribution 34, du fait que de l'air climatisé sort par la sortie d'air, il est nécessaire de diminuer la section transversale de ce conduit de distribution pour conserver le débit.

Dans l'exemple représenté, le deuxième circuit de circulation 36 est un circuit de circulation d'extrémité, c'est-à-dire ne comportant pas de conduit de transfert d'air climatisé vers un autre circuit. En effet, la deuxième voiture 16 est une voiture d'extrémité, si bien que l'air climatisé n'est pas transmis à une autre voiture.

Le deuxième circuit de circulation 36 comporte une deuxième arrivée d'air climatisé 42, à travers laquelle passe un flux d'air entrant issu du premier conduit de transfert d'air 35, et au moins un deuxième conduit de distribution d'air climatisé 44 vers une salle de la voiture 16 correspondante. Par exemple, le deuxième circuit 36 comporte deux deuxièmes conduits de distribution 44, s'étendant chacun intégralement dans la deuxième voiture 16. Ces deuxièmes conduits de distribution 44 s'étendent dans une direction longitudinale de la voiture 16, afin de distribuer l'air climatisé tout au long de cette voiture 16.

L'intégralité du flux d'air entrant par l'arrivée d'air climatisé 42 est répartie parmi les deuxièmes conduits de distribution 44, par des deuxièmes moyens de distribution 46.

Chaque deuxième conduit de distribution 44 comporte une sortie d'air climatisé s'étendant le long de ce deuxième conduit de distribution 44, et présente avantageusement une section transversale variable sur au moins une partie de sa longueur.

Comme évoqué précédemment, l'air climatisé issu des moyens d'émission 22 est en partie dévié vers le premier circuit de circulation 28, c'est-à-dire vers les première 14 et deuxième 16 voitures, et en partie dévié vers un autre circuit 30, dit troisième circuit 30.

Ce troisième circuit de circulation d'air 30 est destiné à équiper la troisième voiture 18, et il est sensiblement similaire au premier circuit de circulation 28. En particulier, il comporte :
- une troisième arrivée d'air climatisé 48, à travers laquelle passe un flux d'air entrant issu des moyens d'émission 22, et plus particulièrement une portion du flux d'air déviée par le déflecteur 26,
- au moins un troisième conduit 50 de distribution d'air climatisé vers une salle de la troisième voiture 18, s'étendant le long d'une direction longitudinale de la troisième voiture 18,
- au moins un troisième conduit 52 de transfert d'air climatisé vers un quatrième circuit de circulation d'air climatisé 54 adjacent, s'étendant parallèlement au troisième conduit 50, et
- des troisièmes moyens 56 de répartition d'air climatisé issu de l'arrivée d'air 48, propres à répartir le flux d'air entrant entre les troisièmes conduits de distribution 50 et de transfert 52.

De même, ledit quatrième circuit de circulation 54 est destiné à équiper la quatrième voiture 20, et il est par exemple similaire au deuxième circuit de circulation 36. En particulier, il comporte une quatrième arrivée d'air 58, à travers laquelle passe un flux d'air entrant issu du troisième conduit de transfert d'air 52, et deux quatrièmes conduits 60 de distribution d'air climatisé vers une salle de la voiture 20. L'intégralité du flux d'air entrant est répartie parmi les quatrièmes conduits de distribution 60, par des quatrièmes moyens de répartition 62.

Avantageusement, chacun des premiers 40, deuxièmes 46, troisièmes 56 et quatrièmes 62 moyens de répartition d'air comportent des moyens de variation de la répartition des flux d'air.

On notera que l'invention n'est pas limitée au mode de réalisation précédemment décrit, mais pourrait présenter diverses variantes sans sortir du cadre des revendications.

En particulier, on pourrait prévoir un agencement différent des circuits de circulation. Par exemple, on pourrait insérer une autre voiture munie d'un autre circuit de circulation similaire au premier circuit de circulation 28 entre la première voiture 14 et la deuxième voiture 12. En effet, l'invention permet une grande modularité dans la configuration du véhicule ferroviaire 12.

## Revendications

1. Dispositif (10) de climatisation d'au moins deux voitures adjacentes (14, 16, 18, 20) d'un véhicule ferroviaire, comprenant des moyens (22) d'émission d'un flux d'air climatisé et un réseau (24) de circulation de l'air climatisé, dans lequel le réseau de circulation (24) comporte au moins un premier circuit de circulation d'air climatisé (28) destiné à équiper une première voiture (14), ledit premier circuit de circulation (28) comportant :
- une première arrivée d'air climatisé (32), à travers laquelle passe un flux d'air entrant issu des moyens d'émission (22),
- au moins un premier conduit (34) de distribution d'air climatisé vers une salle de ladite première voiture (14), s'étendant depuis une extrémité amont (34A), communiquant avec l'arrivée d'air (32), jusqu'à une extrémité aval (34B) fermée, les extrémités amont (34A) et aval (34B) étant toutes deux destinées à être agencées dans ladite première voiture (14),
- au moins un premier conduit (35) de transfert d'air climatisé vers un deuxième circuit de circulation d'air climatisé (36) adjacent, ledit deuxième circuit de circulation (36) étant destiné à équiper une deuxième voiture (16) adjacente à la première (14),
- des premiers moyens (40) de répartition d'air climatisé issu de l'arrivée d'air (32), propres à répartir le flux d'air entrant entre les conduits de distribution (34) et de transfert (35),
**caractérisé en ce que** le premier circuit de circulation (28) comporte un premier conduit de transfert central (35), et deux premiers conduits de distribution (34) latéraux agencés latéralement de part et d'autre du premier conduit de transfert (35).

2. Dispositif de climatisation (10) selon la revendication 1, dans lequel :
- chaque premier conduit de distribution (34) comporte une sortie d'air climatisé, comportant au moins un orifice de sortie d'air, la sortie d'air climatisé s'étendant le long du premier conduit de distribution (34),
- chaque premier conduit de distribution (34) présente une section transversale variable, diminuant depuis l'extrémité amont (34A) jusqu'à l'extrémité aval (34B).

3. Dispositif de climatisation (10) selon l'une quelconque des revendications précédentes, dans lequel le réseau de circulation (24) comporte un deuxième circuit de circulation (36), destiné à équiper une deuxième voiture (16) comportant :
- une deuxième arrivée d'air climatisé (42), à travers laquelle passe un flux d'air entrant issu du premier conduit de transfert d'air (35),
- au moins un deuxième conduit (44) de distribution d'air climatisé vers une salle de ladite deuxième voiture (16), l'intégralité du flux d'air entrant étant réparti parmi le ou les deuxièmes conduits de distribution (44).

4. Dispositif de climatisation (10) selon l'une quelconque des revendications précédentes, dans lequel le réseau de circulation (24) comporte un déflecteur (26), agencé en aval des moyens d'émission de flux d'air (22), séparant le flux d'air issu des moyens d'émission (22) en un premier flux d'air dirigé vers ledit premier circuit (28), et en un deuxième flux d'air dirigé vers un troisième circuit de circulation d'air (30).

5. Dispositif de climatisation (10) selon la revendication 4, dans lequel ledit troisième circuit de circulation d'air (30) est destiné à équiper une troisième voiture (18), et comporte :
- une troisième arrivée d'air climatisé (48), à travers laquelle passe un flux d'air entrant issu des moyens d'émission (22),
- au moins un troisième conduit (50) de distribution d'air climatisé vers une salle de ladite troisième voiture (18),
- au moins un troisième conduit (52) de transfert d'air climatisé vers un quatrième circuit de circulation d'air climatisé (54) adjacent,
- des troisièmes moyens (62) de répartition d'air climatisé issu de la troisième arrivée d'air (48), propres à répartir le flux d'air entrant entre les troisième conduits de distribution (50) et de transfert (52).

6. Véhicule ferroviaire (12), comportant au moins deux voitures adjacentes (14, 16, 18, 20), **caractérisé en ce qu'**il comporte un dispositif de climatisation (10) selon l'une quelconque des revendications 1 à 5.

7. Véhicule ferroviaire (12) selon la revendication 6, comportant un dispositif de climatisation (10) selon la revendication 4, et comportant :
- une première voiture (14), dans laquelle est agencé le premier circuit de circulation (28),
- une deuxième voiture (16), adjacente à la première voiture (14), dans laquelle est agencé le deuxième circuit de circulation (36).

8. Véhicule ferroviaire (12) selon la revendication 7, comportant un dispositif de climatisation (10) selon la revendication 4, et comportant une troisième voiture (18), adjacente à la première voiture (14), dans laquelle est agencé ledit troisième circuit de circulation (30).

## Patentansprüche

1. Klimatisierungsvorrichtung (10) für mindestens zwei benachbarte Wagen (14, 16, 18, 20) eines Schienenfahrzeugs, die Mittel (22) zur Abgabe eines klimatisierten Luftstroms und ein Netz (24) für die Zirkulation der klimatisierten Luft umfasst, wobei das Zirkulationsnetz (24) mindestens einen ersten Zirkulationskreis (28) der klimatisierten Luft aufweist, der vorgesehen ist, einen ersten Wagen (14) auszurüsten, wobei der erste Zirkulationskreis (28) aufweist:
- eine erste Zufuhr (32) von klimatisierter Luft, durch die ein eintretender Luftstrom hindurchgeht, der von den Abgabemitteln (22) stammt,
- mindestens einen ersten Versorgungskanal (34) für klimatisierte Luft zu einem Raum des ersten Wagens (14), der sich von einem stromaufwärts liegenden Ende (34A), das mit der Luftzufuhr (32) kommuniziert, bis zu einem stromabwärts liegenden, geschlossenen Ende (34B) erstreckt, wobei die stromaufwärts und stromabwärts liegenden Enden (34A, 34B) beide vorgesehen sind, in dem ersten Wagen (14) angeordnet zu sein,
- mindestens einen ersten Kanal (35) zum Weiterleiten von klimatisierter Luft zu einem benachbarten zweiten Zirkulationskreis (36) von klimatisierter Luft, wobei der zweite Zirkulationskreis (36) vorgesehen ist, einen zweiten Wagen (16) benachbart zum ersten Wagen (14) auszurüsten,
- erste Mittel (40) zum Verteilen der von der Luftzufuhr (32) stammenden klimatisierten Luft, die geeignet sind, den eintretenden Luftstrom zwischen dem Versorgungskanal (34) und Weiterleitungskanal (35) zu verteilen,
**dadurch gekennzeichnet, dass** der erste Zirkulationskreis (28) einen ersten zentralen Weiterleitungskanal (35) und zwei erste seitliche Versorgungskanäle (34) aufweist, die seitlich beidseitig des ersten Weiterleitungskanals (35) angeordnet sind.

2. Klimatisierungsvorrichtung (10) nach Anspruch 1, bei der:
- jeder erste Versorgungskanal (34) einen Austritt von klimatisierter Luft aufweist, der mindestens eine Luftaustrittsöffnung aufweist, wobei der Austritt von klimatisierter Luft sich entlang des ersten Versorgungskanal (34) erstreckt,
- jeder erste Versorgungskanal (34) einen variablen Querschnitt aufweist, der sich von dem stromaufwärts liegenden Ende (34A) bis zum stromabwärts liegenden Ende (34B) erstreckt.

3. Klimatisierungsvorrichtung (10) nach einem beliebigen der vorhergehenden Ansprüche, bei der das Zirkulationsnetz (24) einen zweiten Zirkulationskreis (36) aufweist, der vorgesehen ist, einen zweiten Wagen (16) auszurüsten, aufweisend:
- eine zweite Zufuhr (42) von klimatisierter Luft, durch die ein eintretender Luftstrom hindurchgeht, der von dem ersten Kanal (35) zum Weiterleiten von Luft stammt,
- mindestens einen zweiten Versorgungskanal (44) für klimatisierte Luft zu einem Raum des zweiten Wagens (16), wobei die Gesamtheit des eintretenden Luftstroms zwischen dem oder den zweiten Versorgungskanal/kanälen (44) verteilt wird.

4. Klimatisierungsvorrichtung (10) nach einem beliebigen der vorhergehenden Ansprüche, bei dem das Zirkulationsnetz (24) ein Ablenkelement (26) aufweist, das stromabwärts zu den Mitteln (22) zur Abgabe eines Luftstroms angeordnet ist und den von den Abgabemitteln (22) stammenden Luftstrom in einen ersten Luftstrom, der zu dem ersten Kreis (28) gerichtet ist, und einen zweiten Luftstrom, der zu einem dritten Luftzirkulationskreis (30) gerichtet ist, trennt.

5. Klimatisierungsvorrichtung (10) nach Anspruch 4, bei der der dritte Luftzirkulationskreis (30) vorgesehen ist, einen dritten Wagen (18) auszurüsten, und aufweist:
- eine dritte Zufuhr (48) von klimatisierter Luft, durch die ein eintretender Luftstrom hindurchgeht, der von den Abgabemitteln (22) stammt,
- mindestens einen dritte Versorgungskanal (50) für klimatisierte Luft zu einem Raum des dritte Wagens (18),
- mindestens einen dritten Kanal (52) zum Weiterleiten von klimatisierter Luft zu einem benachbarten vierten Zirkulationskreis (54) von klimatisierter Luft,
- dritte Mittel (62) zum Verteilen der von der dritten Luftzufuhr (48) stammenden klimatisierten Luft, die geeignet sind, den eintretenden Luftstrom zwischen dem dritten Versorgungskanal (34) und dritten Weiterleitungskanal (35) zu verteilen.

6. Schienenfahrzeug (12), das mindestens zwei benachbarte Wagen (14, 16, 18, 20) aufweist, **dadurch gekennzeichnet, dass** es eine Klimatisierungsvorrichtung (10) nach einem beliebigen der Ansprüche 1 bis 5 aufweist.

7. Schienenfahrzeug (12) nach Anspruch 6, das eine Klimatisierungsvorrichtung (10) nach Anspruch 4 aufweist und umfasst:
- einen ersten Wagen (14), in dem der erste Zirkulationskreis (28) angeordnet ist,
- einen zweiten Wagen (16), benachbart zum ersten Wagen (14), in dem der zweite Zirkulationskreis (36) angeordnet ist.

8. Schienenfahrzeug (12) nach Anspruch 7, das eine Klimatisierungsvorrichtung (10) nach Anspruch 4 aufweist und einen dritten Wagen (18) benachbart zum ersten Wagen (14) aufweist, in dem der dritte Zirkulationskreis (30) angeordnet ist.

## Claims

1. A device (10) for air-conditioning at least two adjacent carriages (14, 16, 18, 20) of a railway vehicle, comprising means (22) for emitting a conditioned air flow and a network (24) for circulating conditioned air, wherein the circulation network (24) includes at least one first circuit for circulating conditioned air (28), intended to fit out a first carriage (14), said first circulation circuit (28) including:
- a first conditioned air inlet (32), through which passes an incoming airflow from the emission means (22),
- at least one first conduit (34) for distributing conditioned air towards a compartment from of said first carriage (14), extending from an upstream end (34A), communicating with an air inlet (32), as far as a closed downstream end (34B), the upstream (34A) and downstream (34B) ends being both intended for being laid out in said first carriage (14),
- at least one first conduit (35) for transferring conditioned air towards an adjacent second conditioned air circulation circuit (36), said second circulation circuit (36) being intended to fit out a second carriage (16) adjacent to the first (14),
- first means (40) for distributing conditioned air from the air inlet (32), able to distribute the incoming airflow among the distribution (34) and transfer (35) conduits,
**characterized in that** the first circulation circuit (28) includes a first central transfer conduit (35), and two first lateral distribution conduits (34) laid out laterally on either side of the first transfer conduit (35).

2. The air-conditioning device (10) according to claim 1, wherein:
- each first distribution conduit (34) includes a conditioned air outlet, including at least one air outflow orifice, the conditioned air outlet extending along the first distribution conduit (34),
- each first distribution conduit (34) has a variable cross-section, decreasing from the upstream end (34A) to the downstream end (34B).

3. The air-conditioning device (10) according to any of the preceding claims, wherein the circulation network (24) includes a second circulation circuit (36), intended for fitting out a second carriage (16) including:
- a second conditioned air inlet (42), through which flows an incoming airflow from the first air transfer conduit (35),
- at least one first conduit (44) for distributing conditioned air towards a compartment room of said second carriage (16), the whole of the incoming airflow being distributed among the second distribution conduit(s) (44).

4. The air-conditioning device (10) according to any of the preceding claims, wherein the circulation network (24) includes a deflector (26), laid out downstream from the means for emitting an airflow (22), separating the airflow from the emission means (22) into a 1st airflow directed towards said first circuit (28), and into a second airflow directed towards a third air circulation circuit (30).

5. The air-conditioning device (10) according to claim 4, wherein said third air circulation circuit (30) is intended to fit out a third carriage (18), and includes:
- a third conditioned air inlet (48), through which passes an incoming airflow from the emission means (22),
- at least one third conduit (50) for distributing conditioned their towards a compartment room of said third carriage (18),
- at least one third conduit (52) for transferring conditioned air towards an adjacent fourth conditioned air circulation circuit (54),
- third means (62) for distributing conditioned air from the third air inlet (48), able to distribute the incoming airflow among the third distribution (50) and transfer (52) conduits.

6. A railway vehicle (12), including at least two adjacent carriages (14, 16, 18, 20), characterizing that it includes an air-conditioning device (10) according to any of claims 1 to 5.

7. The railway vehicle (12) according to claim 6, including an air conditioning device (10) according to claim 4, and including:
- a first carriage (14), in which is laid out the first circulation circuit (28),
- a second carriage (16), adjacent to the first carriage (14), in which is laid out the second circulation circuit (36).

8. The railway vehicle (12) according to claim 7, including an air-conditioning device (10) according to claim 4, and including a third carriage (18), adjacent to the first carriage (14), in which is laid out said third circulation circuit (30).
